# EUROPEAN PATENT SPECIFICATION

(11) **EP 2 737 941 B1**
(45) Date of publication and mention of the grant of the patent: **16.11.2016**
(21) Application number: 13194802.8
(22) Date of filing: 28.11.2013
(51) Int. Cl.: B01J 19/24, C25B 1/00, C25B 1/04, C25B 3/04, C25B 9/00

(54) **Photoelectrochemical cell**
Photoelectrochemische Zelle
Cellule photoélectrochimique

(30) Priority: 28.11.2012 KR 20120136455
(43) Date of publication of application: 04.06.2014
(73) Proprietor: Samsung Electronics Co., Ltd, Gyeonggi-do 443-742 (KR)
(72) Inventor: JI, Sang Min, Gyeonggi-do (KR); HAM, Dong Jin, Gyeonggi-do (KR); KANG, Hyo Rang, Gyeonggi-do (KR)
(74) Representative: Greene, Simon Kenneth

(56) References cited:
- WO-A1-01/02624
- US-A- 3 925 212
- US-A- 4 124 464
- ADRIANA PARACCHINO ET AL: "Highly active oxide photocathode for photoelectrochemical water reduction", NATURE MATERIALS, vol. 10, no. 6, 8 May 2011 (2011-05-08), pages 456-461, XP055102647, ISSN: 1476-1122, DOI: 10.1038/nmat3017

## Description

### BACKGROUND

### Field

Example embodiments relate to a photoelectrochemical cell.

### Description of the Related Art

Photoelectrochemistry is being suggested for wide use in energy transformation and environmental cleanup. For example, various photoelectrochemical reaction systems and cells using light energy are developed for use in hydrogen production by water splitting and water treatment by organic contaminant destruction. In particular, photoelectrochemistry may be applied to artificial photosynthesis that produces valuable compounds from carbon dioxides (CO₂) and water (H₂O) using solar light energy. The artificial photosynthesis makes carbon dioxides, which is a representative greenhouse gas, and reacts with water by using solar light energy to produce valuable carbon compounds (e.g., methane, methanol, and formic acids). The artificial photosynthesis is a promising future technology that may reduce greenhouse gases and may transform and store solar light energy by carbon dioxide transformation to solve both environmental problems and energy problems.

The hydrogen production by photoelectrochemical water splitting and carbon compound synthesis by photoelectrochemical carbon dioxide reduction are significant applications of photoelectrochemical reaction using light energy and a photocatalyst. The photoelectrochemical reaction may include a photoelectrochemical reactor, e.g., a photoelectrochemical cell, including one or more photoelectrodes made from a photocatalyst material that may absorb light energy to cause oxidation-reduction. A variety of structures of the photoelectrochemical cell are being developed according to improvement of reaction efficiency of photoelectrochemical reaction and reaction characteristics. A representative structure includes a reactor filled with electrolytes, a pair of photoelectrodes coated with photocatalyst materials provided on a transparent conductive substrate in a symmetrical manner, and an ion conductive polymer membrane or an ion-exchange membrane that divides the two photoelectrodes. This structure may provide relatively easy separation of products and both light transparency and conductivity.

The transparent conductive substrate used in this cell structure may be formed of indium tin oxide (ITO) and/or fluorine doped tin oxide (FTO), and the ion-exchange polymer membrane may be formed of Nafion. These materials for the substrate and the membrane may be relatively expensive.

US 3,925,212 teaches a device for photo-electrolytic decomposition of water. In an embodiment, solar radiation is incident on a pair of compartments separated by a membrane.

WO 01/02624 teaches a tandem cell for water cleavage by visible light with a pair of cells.

### SUMMARY

According to a first aspect of the invention, there is provided a photochemical cell according to claim 1.

The first photocatalyst layer may include an oxidative photocatalyst, and the second photocatalyst layer may include a reductive photocatalyst. The first photocatalyst layer may include an N-type metal compound semiconductor, and the second photocatalyst layer may include a P-type metal compound semiconductor. The first photocatalyst layer may include TiO₂ and the second photocatalyst layer may include Cu₂O.

The first electrode and the second electrode may include at least one of a metal, a metal compound, and carbon. The first electrode and the second electrode may include at least one of aluminum (Al), glassy carbon, and n-BaTiO₃.

The compartment divider may include at least one of Teflon®, a rubber, and an insulating polymer. The compartment divider may include a flexible material.

At least one of the first photocatalyst layer and the second photocatalyst layer may have an uneven surface. At least one of the first surface and the second surface of the compartment divider may be uneven. The first surface and the second surface of the compartment divider may be curved, and the uneven surface of at least one of the first photocatalyst layer and the second photocatalyst layer may conform to a shape of the first surface and the second surface of the compartment divider.

At least one of the first photocatalyst layer and the second photocatalyst layer may have an inclined surface. At least one of the first surface and the second surface of the compartment divider may be inclined.

The compartment divider, the first electrode, the second electrode, the first photocatalyst layer, and the second photocatalyst layer may be incorporated into a single body.

The photoelectrochemical cell may further include a first electrode catalyst on a surface of the first photocatalyst layer and contacting the first electrolyte. The photoelectrochemical cell may further include a second electrode catalyst on a surface of the second photocatalyst layer and contacting the second electrolyte. The first electrode catalyst and the second electrode catalyst may include at least one of a metal, a metal compound, and carbon.

The first photocatalyst layer may contact the first electrolyte, and the second photocatalyst layer may contact the second electrolyte.

The micropump includes one of an electric pump, and an electroosmotic pump. The photoelectrochemical cell may further include a conductive wire configured to connect the first electrode and the second electrode to each other, and the micropump may be connected to the conductive wire.

### BRIEF DESCRIPTION OF THE DRAWINGS

FIG. 1 is a schematic sectional view of a photoelectrochemical cell according to example embodiments.
FIG. 2 to FIG. 9 are schematic sectional views of a separator, first and second electrodes, and first and second photocatalyst layers according to example embodiments.
FIG. 10 is a schematic sectional view of a photoelectrochemical cell according to example embodiments.

### DETAILED DESCRIPTION

Example embodiments will now be described more fully with reference to the accompanying drawings, in which some example embodiments are shown. Example embodiments, may, however, be embodied in many different forms and should not be construed as being limited to the embodiments set forth herein; rather, these example embodiments are provided so that this disclosure will be thorough and complete, and will fully convey the scope of example embodiments of inventive concepts to those of ordinary skill in the art. In the drawings, the thicknesses of layers and regions are exaggerated for clarity. Like reference numerals in the drawings denote like elements, and thus their description may be omitted. In the drawing, parts having no relationship with the explanation are omitted for clarity.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. As used herein the term "and/or" includes any and all combinations of one or more of the associated listed items. Other words used to describe the relationship between elements or layers should be interpreted in a like fashion (e.g., "between" versus "directly between," "adjacent" versus "directly adjacent," "on" versus "directly on").

It will be understood that, although the terms "first", "second", etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of example embodiments.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises", "comprising", "includes" and/or "including," if used herein, specify the presence of stated features, integers, steps, operations, elements and/or components, but do not preclude the presence or addition of one or more other features, integers, steps, operations, elements, components and/or groups thereof.

Example embodiments are described herein with reference to cross-sectional illustrations that are schematic illustrations of idealized embodiments (and intermediate structures) of example embodiments. As such, variations from the shapes of the illustrations as a result, for example, of manufacturing techniques and/or tolerances, are to be expected. Thus, example embodiments should not be construed as limited to the particular shapes of regions illustrated herein but are to include deviations in shapes that result, for example, from manufacturing. For example, an implanted region illustrated as a rectangle may have rounded or curved features and/or a gradient of implant concentration at its edges rather than a binary change from implanted to non-implanted region. Likewise, a buried region formed by implantation may result in some implantation in the region between the buried region and the surface through which the implantation takes place. Thus, the regions illustrated in the figures are schematic in nature and their shapes are not intended to illustrate the actual shape of a region of a device and are not intended to limit the scope of example embodiments.

Unless otherwise defined, all terms (including technical and scientific terms) used herein have the same meaning as commonly understood by one of ordinary skill in the art to which example embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

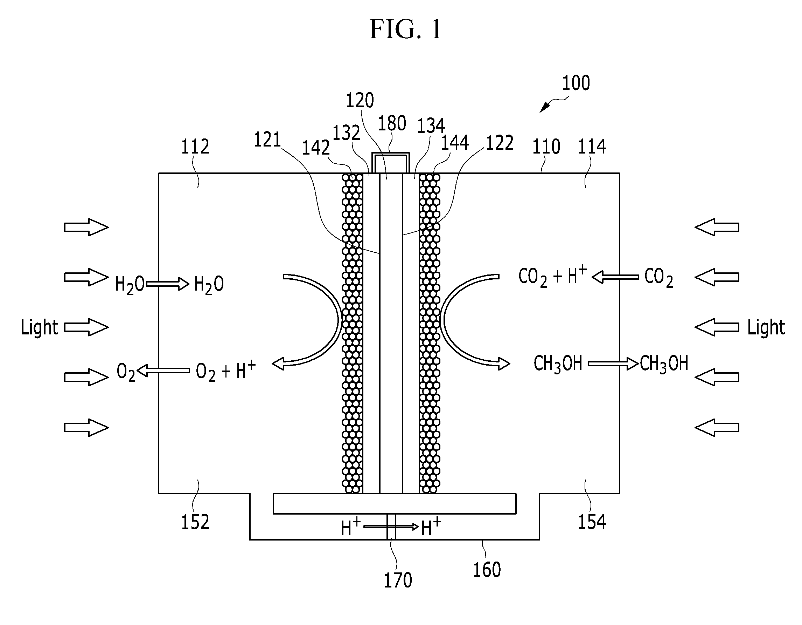

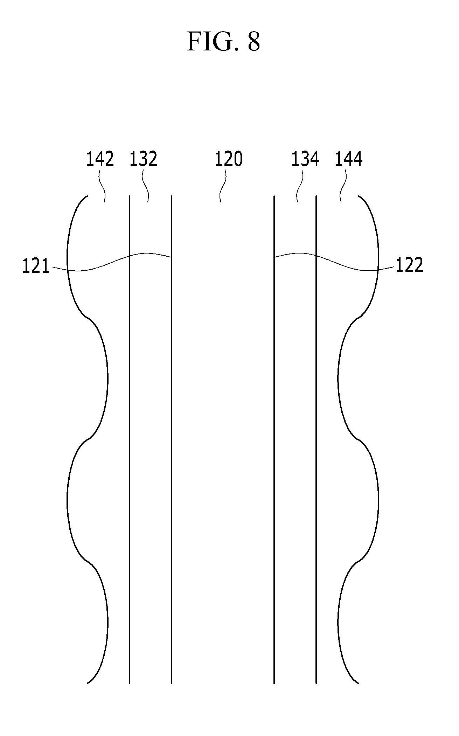

A photoelectrochemical cell according to example embodiments are described in detail with reference to FIG. 1 to FIG. 9.

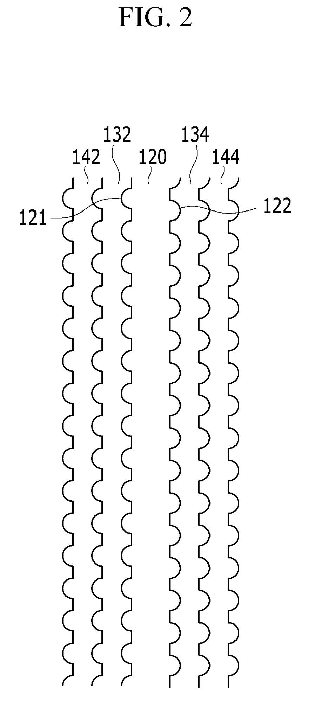

FIG. 1 is a schematic sectional view of a photoelectrochemical cell according to example embodiments, and FIG. 2 to FIG. 9 are schematic sectional views of a separator, first and second electrodes, and first and second photocatalyst layers according to example embodiments.

Referring to FIG. 1, a photoelectrochemical cell 100 according to example embodiments may include a container 110, a compartment divider 120, a first electrode 132, a second electrode 134, a first photocatalyst layer 142, a second photocatalyst layer 144, a first electrolyte 152, a second electrolyte 154, an electrolyte passage 160, a micropump 170, and a conductive wire 180.

The container 110, which may include an insulator, may include two compartments, an oxidation compartment 112 and a reduction compartment 114 divided by the compartment divider 120. The oxidation compartment 112 may be filled with the first electrolyte 152, and the reduction compartment 114 may be filled with the second electrolyte 154. The oxidation compartment 112 and the reduction compartment 114 may communicate with each other via the electrolyte passage 160 that may be separately provided, and the electrolyte 152 and 154 may flow between the compartments 112 and 114 through the passage 160.

The flowing direction of the electrolytes 152 and 154 is controlled by the micropump 170 provided at the middle of the electrolyte passage 160. For example, the micropump 170 may make the electrolyte 152 in the oxidation compartment 112 flow toward the reduction compartment 114 while the micropump may prevent or inhibit the electrolyte 154 in the reduction compartment 114 from flowing toward the oxidation compartment 112. The micropump 170 is one of an electric pump, and an electroosmotic pump. According to example embodiments, the micropump 170 may be connected to the conductive wire 180 such that the micropump 170 may be operated by electrical energy carried by the conductive wire 180.

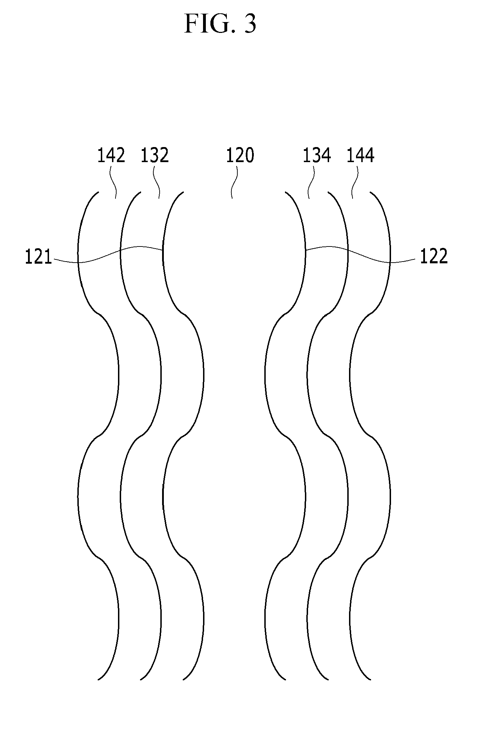

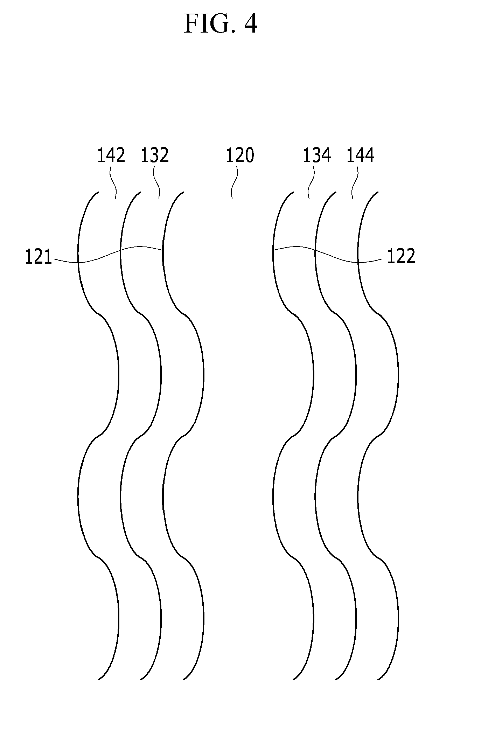

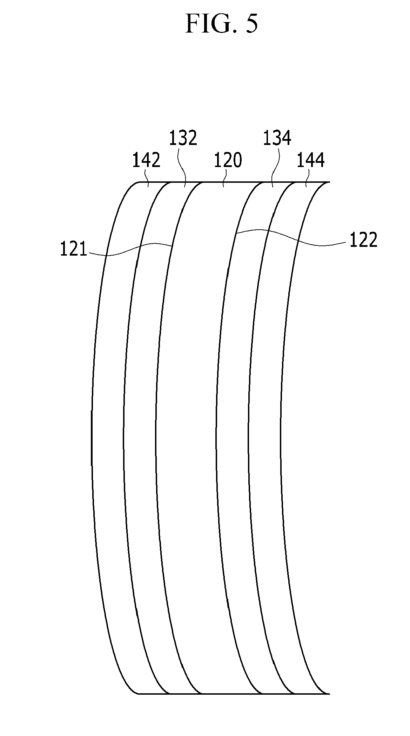

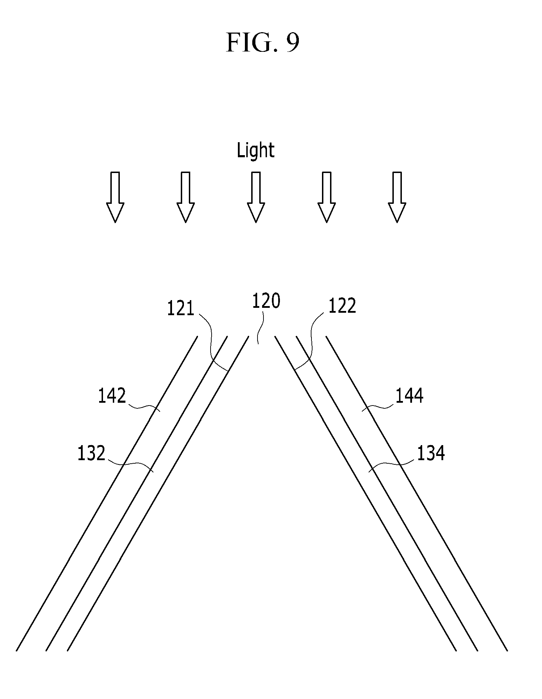

The compartment divider 120 may include an insulating material, for example, Teflon®, a rubber, and an insulating polymer, and the divider 120 may have a first surface 121 facing the oxidation compartment 112 and a second surface 122 facing the reduction compartment 114. Both the two surfaces 121 and 122 of the compartment divider 120 may be flat as shown in FIG. 1, and FIG. 6 to FIG. 8, or either or both surfaces may be uneven as shown in FIG. 2 to FIG. 5. According to example embodiments, relatively fine unevenness may be formed on the first and second surfaces 121 and 122 of the compartment divider 120 as shown in FIG. 2, or the first and second surfaces 121 and 122 are relatively widely curved as shown in FIG. 3. Referring to FIG. 4 and FIG. 5, the compartment divider 120 may be curved as a whole. In example embodiments, the compartment divider 120 may include a flexible material that can be more easily curved or bent. However, the shape of the compartment divider 120 is not limited thereto and the compartment divider 120 may have various shapes. According to example embodiments, referring to FIG. 9, the first and second surfaces 121 and 122 of the compartment divider 120 may be slanted.

The first electrode 132 may be disposed on the first surface 121 of the compartment divider 120, and the second electrode 134 may be disposed on the second surface 122 of the compartment divider 120. The first electrode 132 and the second electrode 134 may be connected to each other through the conductive wire 180. The first electrode 132 and the second electrode 134 may include at least one of a low-resistivity metal, a metal compound, and carbon, for example, aluminum (Al), glassy carbon, and n-BaTiO₃.The first electrode 132 and the second electrode 134 may be attached to the compartment divider 120 by sputtering, simple adhesion, or thin film coating, for example, and may have a thickness of about 10 nm to about 1 mm. The first electrode 132 and the second electrode 134 may have surfaces conforming to the first and second surfaces 121 and 122 of the compartment divider 120. For example, the surfaces of the first electrode 132 and the second electrode 134 may be flat as shown in FIG. 1, and FIG. 6 to FIG. 8, may be uneven as shown in FIG. 2 to FIG. 5, and may be slanted as shown in FIG. 9.

The first photocatalyst layer 142 may be disposed on the first electrode 132, and the second photocatalyst layer 144 may be disposed on the second electrode 134. The first photocatalyst layer 142 may include an oxidative photocatalyst, and the second photocatalyst layer 144 may include a reductive photocatalyst. The oxidative photocatalyst may include an N-type metal compound semiconductor (e.g., TiO₂ Fe₂O₃, and WO₃) and the reductive photocatalyst may include a P-type metal compound semiconductor (e.g., Cu₂O, p-GaP, and p-SiC). The first photocatalyst layer 142 and the second photocatalyst layer 144 may be deposited by sputtering, chemical vapor deposition (CVD), evaporation and/or thin film coating. Each of the first photocatalyst layer 142 and the second photocatalyst layer 144 may have a thickness of about 10 nm to about 500 µm.

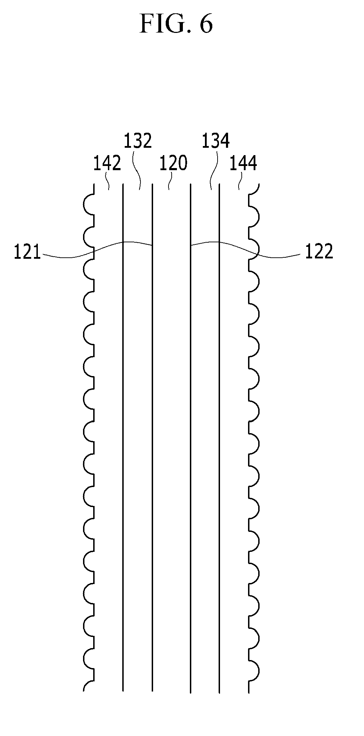

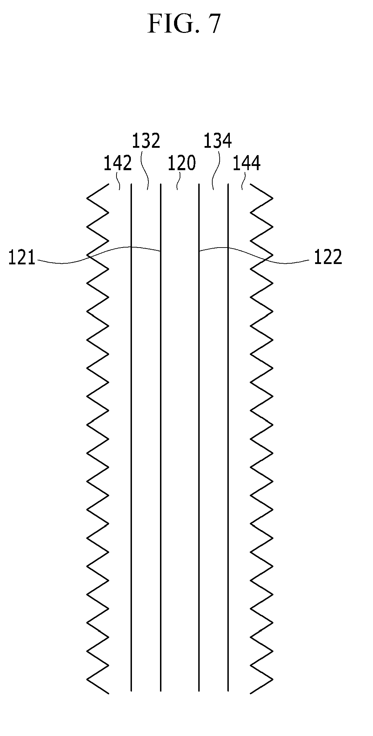

At least one of the first photocatalyst layer 142 and the second photocatalyst layer 144 may have an uneven surface as shown in FIG. 2 to FIG. 6. The unevenness of the first photocatalyst layer 142 or the second photocatalyst layer 144 may conform to the shape of the surface of the compartment divider 120 as shown in FIG. 2 to FIG. 5. However, the unevenness of the first photocatalyst layer 142 or the second photocatalyst layer 144 may be formed independent from the surface shape of the compartment divider 120. For example, referring to FIG. 6 to FIG. 8, the first photocatalyst layer 142 or the second photocatalyst layer 144 may have an uneven surface although the surfaces of the compartment divider 120, the first electrode 132, and the second electrode 134 are flat. The unevenness of the first photocatalyst layer 142 and the second photocatalyst layer 144 may be round as shown in FIG. 6, or may be saw-toothed as shown in FIG. 7.

According to example embodiments, the first photocatalyst layer 142 and the second photocatalyst layer 144 may have a slanted surface. The inclination of the surfaces of the first photocatalyst layer 142 and the second photocatalyst layer 144 may be caused by the inclined surfaces of the compartment divider 120 as shown in FIG. 9. The unevenness shown in FIG. 2 to FIG. 6 may be applied to the structure shown in FIG. 9. However, the shapes of the first photocatalyst layer 142 and the second photocatalyst layer 144 are not limited to the above-described shapes.

As described above, the divider 120, the electrodes 132 and 134, and the photocatalyst layers 142 and 144 may be incorporated into a single body. Because the photocatalyst layers 142 and 144 are disposed further from the divider 120 than the electrodes 132 and 134, external light may be incident on the photocatalyst layers 142 and 144 without passing through the electrodes 132 and 134, and thus, the electrodes 132 and 134 may not be transparent. Therefore, cheaper opaque materials with relatively low resistivity instead of more expensive transparent conductive materials may be selected as materials for the electrodes 132 and 134.

The first electrolyte 152 may include pure water or sea water, and may further include at least one of NaOH and KOH, for example. The second electrolyte 154 may include pure water or sea water, and may further include NaHCO₃ and KHCO₃

Operation of the photoelectrochemical cell 100 is described in detail below. Light may be incident on the photoelectrochemical cell 100. The light may proceed from left and right sides of the cell 100 with the structures shown in FIG. 1 to FIG. 6 or from a top of the cell 100 with the structure shown in FIG. 9.

When the first photocatalyst layer 142 in the oxidation compartment 112 receives the light, the first electrolyte 152 in contact with the first photocatalyst layer 142 may be oxidized to produce oxygen gases (O₂), hydrogen ions (H+), and electrons. The hydrogen ions in the oxidation compartment 112 may move toward the reduction compartment 114 through the electrolyte passage 160, and the electrons may move to the first electrode 132 and to the second electrode 134 through the conductive wire 180.

When the second photocatalyst layer 144 in the reduction compartment 114, which is in contact with the second electrolyte 154, receives the light, carbon dioxides (CO₂) may react with the hydrogen ions in the second electrolyte 154 to be reduced to produce carbon compounds, for example, methanol (CH₃OH)

As described above, the photoelectrochemical cell according to example embodiments may produce carbon compounds from carbon dioxides using light energy without more expensive transparent materials or an ion-exchange membrane.

The micropump 170 controls the electrolytes 152 and 154 to flow in one way, and thus the micropump 170 may obstruct products, for example, methanol produced in the reduction compartment 114, from flowing backward to the oxidation compartment 112 and being reoxidized.

Referring to FIG. 2 to FIG. 8, the surface unevenness of the first photocatalyst layer 142 and the second photocatalyst layer 144 may cause the scattering of the incident light, thereby increasing the light absorption of the first photocatalyst layer 142 and the second photocatalyst layer 144. In addition, the unevenness may increase the contact area between the photocatalyst layers 144 and the electrolytes 152 and 154, thereby increasing reaction efficiency.

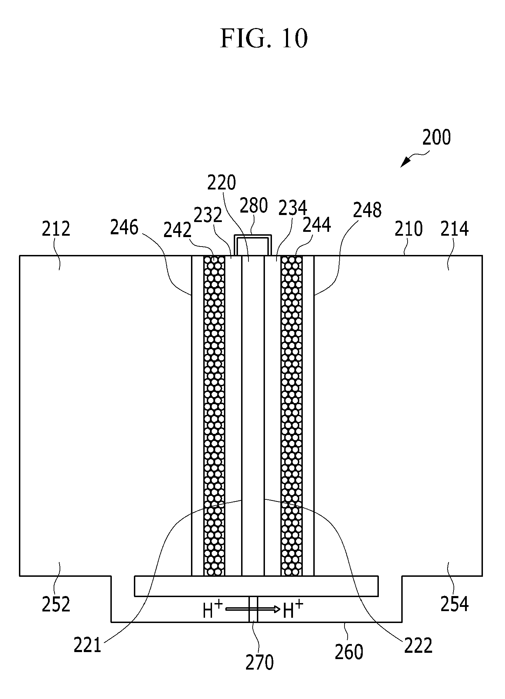

A photoelectrochemical cell according to example embodiments are described in detail with reference to FIG. 10. FIG. 10 is a schematic sectional view of a photoelectrochemical cell according to example embodiments.

Referring to FIG. 10, a photoelectrochemical cell 200 according to example embodiments may include a container 210, a compartment divider 220, a first electrode 232, a second electrode 234, a first photocatalyst layer 242, a second photocatalyst layer 244, a first electrolyte 252, a second electrolyte 254, a electrolyte passage 260, a micropump 270, and a conductive wire 280, like the photoelectrochemical cell 100 shown in FIG. 1. The container 210 may include an oxidation compartment 212 and a reduction compartment 214 divided by the compartment divider 220, and the divider 220 may have a first surface 221 facing the oxidation compartment 212 and a second surface 222 facing the reduction compartment 214.

Unlike the photoelectrochemical cell 100 shown in FIG. 1, the photoelectrochemical cell 200 according to example embodiments may further include a first electrode catalyst 246 disposed on a surface of the first photocatalyst layer 242 and a second electrode catalyst 248 disposed on a surface of the second photocatalyst layer 244. Each of the first electrode catalyst 246 and the second electrode catalyst 248 may include at least one of carbon, a metal, and a metal compound, and may have a thickness of about 1 nm to about 100 µm. One of the first electrode catalyst 246 and the second electrode catalyst 248 may be omitted.

The photoelectrochemical cell 200 according to example embodiments may have a structure shown in FIG. 2 to FIG. 9. The photoelectrochemical cell 200 according to example embodiments may be used in artificial photosynthesis, carbon dioxide transformation, water splitting, or organic contaminant destruction.

While some example embodiments have been particularly shown and described, it will be understood by one of ordinary skill in the art that variations in form and detail may be made therein.

## Claims

1. A photoelectrochemical cell comprising:
a compartment divider (120,220) configured to divide a container (110,210) into a first compartment and a second compartment, the compartment divider having a first surface facing the first compartment and a second surface facing the second compartment;
a first electrolyte (152,252) in the first compartment;
a second electrolyte (154,254) in the second compartment;
a first electrode (132,232) on the first surface of the compartment divider;
a second electrode (134,234) on the second surface of the compartment divider;
a first photocatalyst layer (142,242) on the first electrode;
a second photocatalyst layer (144,244) on the second electrode; and
an electrolyte passage (160,260) connecting the first compartment and the second compartment, **characterized by** further comprising a micropump (170, 270) in the electrolyte passage configured to control the first electrolyte and the second electrolyte to flow in one direction through the electrolyte passage (160, 260), wherein the micropump is one of an electric pump or an electroosmotic pump.

2. The photoelectrochemical cell of claim 1, wherein the first photocatalyst layer (142,242) includes an oxidative photocatalyst, and the second photocatalyst layer (144,244) includes a reductive photocatalyst.

3. The photoelectrochemical cell of claim 1 or 2, wherein the first photocatalyst layer (142,242) includes an N-type metal compound semiconductor, and the second photocatalyst layer (144,244) includes a P-type metal compound semiconductor.

4. The photoelectrochemical cell of any preceding claim, wherein the first photocatalyst layer (142,242) includes TiO₂ and the second photocatalyst layer (144,244) includes Cu₂O.

5. The photoelectrochemical cell of any preceding claim, wherein the first electrode (132,232) and the second electrode (134,234) include at least one of a metal, a metal compound, and carbon and optionally wherein the first electrode and the second electrode include at least one of aluminum (Al), glassy carbon, and n-BaTiO₃.

6. The photoelectrochemical cell of any preceding claim, wherein the compartment divider (120,220) includes at least one of Teflon®, a rubber, and an insulating polymer.

7. The photoelectrochemical cell of any preceding claim, wherein the compartment divider (120,220) includes a flexible material.

8. The photoelectrochemical cell of any preceding claim, wherein at least one of the first photocatalyst layer (142,242) and the second photocatalyst layer (144,244) has an uneven surface, and optionally wherein at least one of the first surface and the second surface of the compartment divider is uneven.

9. The photoelectrochemical cell of claim 8, wherein
the first surface and the second surface of the compartment divider (120,220) are curved, and
the uneven surface of the at least one of the first photocatalyst layer (142,242) and the second photocatalyst layer (242,244) conforms to a shape of the first surface and the second surface of the compartment divider.

10. The photoelectrochemical cell of any preceding claim, further comprising:
a first electrode catalyst (246) on a surface of the first photocatalyst layer (244), the first electrode catalyst contacting the first electrolyte.

11. The photoelectrochemical cell of claim 10, further comprising:
a second electrode catalyst (248) on a surface of the second photocatalyst layer (244), the second electrode catalyst contacting the second electrolyte.

12. The photochemical cell of claim 11 wherein the first electrode catalyst (246) and the second electrode catalyst (248) include at least one of a metal, a metal compound, and carbon.

13. The photoelectrochemical cell of any of claims 1 to 9, wherein the first photocatalyst layer (142) contacts the first electrolyte (152) and the second photocatalyst layer (144) contacts the second electrolyte (154).

14. The photochemical cell of any preceding claim further comprising:
a conductive wire (180,280) configured to connect the first electrode and the second electrode,
wherein the micropump (170,270) is connected to the conductive wire.

## Patentansprüche

1. Photoelektrochemische Zelle, umfassend:
einen Fachteiler (120, 220), der konfiguriert ist, um eine Behälter (110, 210) in ein erstes Fach und ein zweites Fach zu teilen, wobei der Fachteiler eine erste Oberfläche aufweist, die dem ersten Fach zugewandt ist, und eine zweite Oberfläche, die dem zweiten Fach zugewandt ist; einen ersten Elektrolyt (152, 252) in dem ersten Fach; einen zweiten Elektrolyt (154, 254) in dem zweiten Fach; eine erste Elektrode (132, 232) auf der ersten Oberfläche des Fachteilers;
eine zweite Elektrode (134, 234) auf der zweiten Oberfläche des Fachteilers;
eine erste Photokatalysatorschicht (142, 242) auf der ersten Elektrode; eine zweite Photokatalysatorschicht (144, 244) auf der zweiten Elektrode; und einen Elektrolytkanal (160, 260), der das erste Fach und das zweite Fach verbindet, ferner **gekennzeichnet durch** eine Mikropumpe (170, 270) in dem Elektrolytkanal, die konfiguriert ist, um den ersten Elektrolyt und den zweiten Elektrolyt zu steuern, um in eine Richtung **durch** den Elektrolytkanal (160, 260) zu strömen, wobei die Mikropumpe eine von einer elektrischen Pumpe oder einer elektroosmotischen Pumpe ist.

2. Photoelektrochemische Zelle nach Anspruch 1, wobei die erste Photokatalysatorschicht (142, 242) einen oxidativen Photokatalysator einschließt und die zweite Photokatalysatorschicht (144, 244) einen reduktiven Photokatalysator einschließt.

3. Photoelektrochemische Zelle nach Anspruch 1 oder 2, wobei die erste Photokatalysatorschicht (142, 242) einen n-Typ-Metallverbindungsableiter einschließt und die zweite Photokatalysatorschicht (144, 244) einen p-Typ-Metallverbindungsableiter einschließt.

4. Photoelektrochemische Zelle nach einem der vorhergehenden Ansprüche, wobei die erste Photokatalysatorschicht (142, 242) TiO₂ einschließt und die zweite Photokatalysatorschicht (144, 244) Cu₂O einschließt.

5. Photoelektrochemische Zelle nach einem der vorhergehenden Ansprüche, wobei die erste Elektrode (132,232) und die zweite Elektrode (134,234) zumindest eines von einem Metall, einer Metallverbindung und Kohlenstoff einschließt, wobei die erste Elektrode und die zweite Elektrode gegebenenfalls zumindest eines von Aluminium (A1), glasartigem Kohlenstoff und n-BaTiO₃ einschließen.

6. Photoelektrochemische Zelle nach einem der vorhergehenden Ansprüche, wobei der Fachteiler (120, 220) zumindest eines von Teflon®, einem Gummi und einem isolierenden Polymer einschließt.

7. Photoelektrochemische Zelle nach einem der vorhergehenden Ansprüche, wobei der Fachteiler (120, 220) ein flexibles Material einschließt.

8. Photoelektrochemische Zelle nach einem der vorhergehenden Ansprüche, wobei zumindest eine von der ersten Photokatalysatorschicht (142, 242) und der zweiten Photokatalysatorschicht (144, 244) eine unebene Oberfläche aufweist und wobei zumindest eine von der ersten Oberfläche und der zweiten Oberfläche des Fachteilers gegebenenfalls uneben ist.

9. Photoelektrochemische Zelle nach Anspruch 8, wobei
die erste Oberfläche und die zweite Oberfläche des Fachteilers (120, 220) gekrümmt sind und
die unebene Oberfläche von der zumindest einen der ersten Photokatalysatorschicht (142, 242) und der zweiten Photokatalysatorschicht (242,244) einer Form der ersten Oberfläche und der zweiten Oberfläche des Fachteilers entspricht.

10. Photoelektrochemische Zelle nach einem der vorhergehenden Ansprüche, ferner umfassend:
einen ersten Elektrodenkatalysator (246) auf einer Oberfläche der ersten Photokatalysatorschicht (242), wobei der erste Elektrodenkatalysator den ersten Elektrolyt berührt.

11. Photoelektrochemische Zelle nach Anspruch 10, ferner umfassend:
einen zweiten Elektrodenkatalysator (248) auf einer Oberfläche der zweiten
Photokatalysatorschicht (244), wobei der zweite Elektrodenkatalysator den zweiten Elektrolyt berührt.

12. Photochemische Zelle nach Anspruch 11, wobei der erste Elektrodenkatalysator (246) und der zweite Elektrodenkatalysator (248) zumindest eines von einem Metall, einer Metallverbindung und Kohlenstoff einschließen.

13. Photoelektrochemische Zelle nach einem der Ansprüche 1 bis 9, wobei die erste Photokatalysatorschicht (142) den ersten Elektrolyt (152) berührt und die zweite Photokatalysatorschicht (144) den zweiten Elektrolyt (154) berührt.

14. Photochemische Zelle nach einem der vorhergehenden Ansprüche, ferner umfassend:
einen leitenden Draht (180, 280), der konfiguriert ist, um die erste Elektrode und die zweite Elektrode zu verbinden,
wobei die Mikropumpe (170,270) mit dem leitenden Draht verbunden ist.

## Revendications

1. Cellule photoélectrochimique comprenant :
un diviseur de compartiment (120,220) configuré pour diviser un contenant (110,210) en un premier compartiment et un deuxième compartiment, le diviseur de compartiment ayant une première surface tournée vers le premier compartiment et une deuxième surface tournée vers le deuxième compartiment ;
un premier électrolyte (152,252) dans le premier compartiment ;
un deuxième électrolyte (154,254) dans le deuxième compartiment ;
une première électrode (132,232) sur la première surface du diviseur de compartiment ;
une deuxième électrode (134,234) sur la deuxième surface du diviseur de compartiment ;
une première couche photocatalytique (142,242) sur la première électrode ;
une deuxième couche photocatalytique (144,244) sur la deuxième électrode ; et un passage d'électrolyte (160,260) reliant le premier compartiment et le deuxième compartiment, **caractérisé en ce qu'**elle comprend en outre une micropompe (170,270) dans le passage d'électrolyte configuré pour commander la circulation du premier électrolyte et du deuxième électrolyte de circuler dans une direction à travers le passage d'électrolyte (160, 260), où la micropompe est une pompe électrique ou bien une pompe électroosmotique.

2. Cellule photoélectrochimique selon la revendication 1, où la première couche photocatalytique (142,242) comprend un photocatalyseur oxydatif, et la deuxième couche photocatalytique (144,244) comprend un photocatalyseur réductif.

3. Cellule photoélectrochimique selon la revendication 1 ou la revendication 2, où la première couche photocatalytique (142,242) comprend un semi-conducteur composé de métal de type N, et la deuxième couche photocatalytique (144,244) comprend un semi-conducteur composé de métal de type P.

4. Cellule photoélectrochimique selon l'une quelconque des revendications précédentes, où la première couche photocatalytique (142,242) comprend du TiO₂ et la deuxième couche photocatalytique (144,244) comprend du Cu₂O.

5. Cellule photoélectrochimique selon l'une quelconque des revendications précédentes, où la première électrode (132,232) et la deuxième électrode (134,234) comprennent au moins l'un d'un métal, un composé de métal et un carbone et, éventuellement, où la première électrode et la deuxième électrode comprennent au moins un d'aluminium (Al), de carbone vitreux et de n-BaTiO₃.

6. Cellule photoélectrochimique selon l'une quelconque des revendications précédentes, où le diviseur de compartiment (120,220) comprend au moins l'un de Téflon®, un caoutchouc et un polymère isolant.

7. Cellule photoélectrochimique selon l'une quelconque des revendications précédentes, où le diviseur de compartiment (120,220) comprend un matériau flexible.

8. Cellule photoélectrochimique selon l'une quelconque des revendications précédentes, où au moins l'une de la première couche photocatalytique (142,242) et de la deuxième couche photocatalytique (144,244) présente une surface inégale, et, éventuellement, où au moins l'une de la première surface et de la deuxième surface du diviseur de compartiment est inégale.

9. Cellule photoélectrochimique selon la revendication 8, où
la première surface et la deuxième surface du diviseur de compartiment (120,220) sont courbées, et
la surface inégale de ladite au moins une de la première couche photocatalytique (142,242) et de la deuxième couche photocatalytique (242,244) épouse la forme de la première surface et la deuxième surface du diviseur de compartiment.

10. Cellule photoélectrochimique selon l'une quelconque des revendications précédentes, comprenant en outre :
un premier catalyseur d'électrode (246) sur une surface de la première couche photocatalytique (244), le premier catalyseur d'électrode venant au contact du premier électrolyte.

11. Cellule photoélectrochimique selon la revendication 10, comprenant en outre :
un deuxième catalyseur d'électrode (248) sur une surface de la deuxième couche photocatalytique (244), le deuxième catalyseur d'électrode venant au contact du deuxième électrolyte.

12. Cellule photochimique selon la revendication 11, où le premier catalyseur d'électrode (246) et le deuxième catalyseur d'électrode (248) comprennent au moins l'un d'un métal, d'un composé de métal et d'un carbone.

13. Cellule photoélectrochimique selon l'une quelconque des revendications 1 à 9, où la première couche photocatalytique (142) touche le premier électrolyte (152) et la deuxième couche photocatalytique (144) touche le deuxième électrolyte (154).

14. Cellule photoélectrochimique selon l'une quelconque des revendications précédentes, comprenant en outre :
un fil conducteur (180,280) configuré pour relier la première électrode et la deuxième électrode,
où la micropompe (170,270) est reliée au fil conducteur.
